(19) **Europäisches Patentamt European Patent Office Office européen des brevets**

(11) **EP 4 272 038 B1**

(12) **FASCICULE DE BREVET EUROPÉEN**

(45) Date de publication et mention de la délivrance du brevet:
**08.10.2025   Bulletin 2025/41**

(21) Numéro de dépôt: **21839946.7**

(22) Date de dépôt: **16.12.2021**

(51) Classification Internationale des Brevets (IPC):
**G05B 19/19** *(2006.01)*   **G05B 19/401** *(2006.01)*
**B66D 1/12** *(2006.01)*   **B66D 1/22** *(2006.01)*
**B66D 1/48** *(2006.01)*   **G05B 13/02** *(2006.01)*

(52) Classification Coopérative des Brevets (CPC):
**G05B 13/0215; B66D 1/12; B66D 1/225;
B66D 1/485;** G05B 19/401

(86) Numéro de dépôt international:
**PCT/EP2021/086084**

(87) Numéro de publication internationale:
**WO 2022/144180 (07.07.2022 Gazette 2022/27)**

(54) **PROCÉDÉ DE COMMANDE D'UN ENSEMBLE D'ACTIONNEMENT**

VERFAHREN ZUR STEUERUNG EINER BETÄTIGUNGSANORDNUNG

METHOD FOR CONTROLLING AN ACTUATION ASSEMBLY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.01.2021   FR 2100019**

(43) Date de publication de la demande:
**08.11.2023   Bulletin 2023/45**

(73) Titulaire: **Commissariat à l'Energie Atomique et
aux Energies
Alternatives
75015 Paris (FR)**

(72) Inventeur: **GARREC, Philippe
91190 Gif-sur-Yvette (FR)**

(74) Mandataire: **Cabinet Boettcher et al
5, rue de Vienne
75008 Paris (FR)**

(56) Documents cités:
**FR-A1- 2 960 808**

## Description

La présente invention concerne le domaine des actionneurs et plus particulièrement la commande des actionneurs comprenant un réducteur mécanique.

ARRIERE PLAN DE L'INVENTION

Il est connu de commander la rotation d'une articulation à l'aide d'un ensemble d'actionnement électrique piloté par une unité de commande. Un tel ensemble comprend généralement un contrôleur de courant relié à un actionneur constitué d'un moteur couplé à un réducteur dont la sortie rotative actionne l'articulation. Pour des applications d'équilibrage partiel ou total d'une masse à manipuler, il est courant de commander l'ensemble d'actionnement pour qu'il exerce un couple de sortie. Pour ce faire, l'unité de commande détermine une consigne d'intensité qui est envoyée au contrôleur de courant. Le contrôleur de courant applique alors un courant d'intensité égale à la consigne de courant au moteur qui génère un couple moteur. Ce couple moteur est appliqué à l'entrée du réducteur qui produit un couple de sortie. Le courant de consigne est généralement déterminé en divisant une valeur cible de couple moteur-déterminée selon les caractéristiques du réducteur de consigne-par la constante électromagnétique du moteur qui lie proportionnellement le couple moteur et l'intensité appliquée selon une relation de la forme :

$$Cmot = K * Imot$$

Où :

Cmot est le couple moteur
Imot est l'intensité appliquée en entrée du moteur
K est la constante électromagnétique du moteur fournie par le fabricant du moteur.

La constante électromagnétique du moteur fournie par les constructeurs est généralement trop peu précise pour être utilisable dans des applications en boucle ouverte pour lesquelles la maitrise du couple de sortie est importante telle que des applications de télé opération ou d'amplification d'effort maître (cobots).

Enfin, on peut également constater une incertitude du contrôleur de courant entre la valeur du courant de consigne qu'il reçoit et la valeur du courant de consigne qu'il génère. En effet, la valeur du courant de consigne généré par le contrôleur de courant peut varier d'un exemplaire de contrôleur de courant à l'autre, varier au cours du temps ou dépendre de la température par exemple. Ces imprécisions rendent difficile l'utilisation de tels système d'actionnement dans des applications qui requièrent une grande précision dans les efforts de sortie appliqués.

Enfin, la différence entre la caractéristique liant le signal d'entrée (intensité électrique ou couple mécanique) et le couple de sortie selon que la sortie de l'actionneur se déplace dans un sens ou dans l'autre contribue à l'imprécision de l'équilibrage d'un tel actionneur.

Selon un autre aspect, le document FR 2 960 808 propose un procédé d'identification de frottements dans une articulation de bras de robot ou de bras manipulateur, et un procédé de compensation correspondant.

OBJET DE L'INVENTION

L'invention a notamment pour but d'améliorer la précision de commande du couple ou de la force générée par un système d'actionnement.

RESUME DE L'INVENTION

A cet effet, on prévoit, un procédé de commande d'un ensemble d'actionnement électrique comportant un contrôleur de courant relié à un actionneur, l'actionneur comprenant un moteur couplé à un réducteur ayant un rapport de réduction connu, l'ensemble d'actionnement étant pourvu d'une sortie. Le procédé est défini à la revendication indépendante 1 et comprend les étapes suivantes :

- appliquer une pluralité de premiers efforts de sortie connus sur la sortie de l'ensemble d'actionnement et enregistrer à l'aide du contrôleur de courant une pluralité de premières intensités d'entrée associées à appliquer en entrée de l'ensemble d'actionnement pour obtenir un équilibre de l'ensemble d'actionnement dans un premier sens de mouvement de la sortie ;
- établir par interpolation une première fonction de caractéristique de l'ensemble d'actionnement liant une intensité commandée en entrée de l'ensemble d'actionnement et un effort obtenu en sortie de l'ensemble d'actionnement;

- appliquer une pluralité de deuxièmes efforts de sortie connus sur la sortie de l'ensemble d'actionnement et enregistrer à l'aide du contrôleur de courant une pluralité de deuxièmes intensités d'entrée associées à appliquer en entrée de l'ensemble d'actionnement pour obtenir un équilibre de l'ensemble d'actionnement dans un deuxième sens de mouvement de la sortie opposé au premier sens ;
- établir par interpolation une deuxième fonction de caractéristique de l'ensemble d'actionnement liant une intensité commandée en entrée de l'ensemble d'actionnement et un effort obtenu en sortie de l'ensemble d'actionnement;
- établir à partir de la première fonction de caractéristique de l'ensemble d'actionnement, de la deuxième fonction de caractéristique de l'ensemble d'actionnement d'une constante magnétique du moteur et du rapport de réduction du réducteur, un coefficient de correction de commande ;
- commander l'ensemble d'actionnement en appliquant le coefficient de correction de commande.

On obtient alors un procédé de commande qui prend en compte de manière globale, l'ensemble des incertitudes relatives au contrôleur de courant et à la valeur de la constante magnétique du moteur, et tenant compte du sens de mouvement de la sortie du réducteur. Il n'est alors pas nécessaire de réaliser des étalonnages distincts du moteur, du réducteur et du contrôleur de courant, ce qui permet un gain de temps et d'argent lors de la mise en place ou du remplacement d'un ensemble d'actionnement.

Le procédé est particulièrement indiqué pour les actionneurs à diagramme de transfert linéaire lorsque la première fonction de caractéristique est une fonction affine qui s'écrit sous la forme

$$\text{Csd(Ie)= a1*Ie +b1}$$

Où :

a1 et b1 sont des constantes déterminées par interpolation, Csd est l'effort obtenu en sortie de l'ensemble d'actionnement pour un mouvement de la sortie dans le premier sens,
Ie est une intensité appliquée en entrée de l'ensemble d'actionnement.

La deuxième fonction de caractéristique est alors une fonction affine qui s'écrit sous la forme

$$\text{Csi(Ie)= a2*Ie + b2}$$

Où :

a2 et b2 sont des constantes déterminées par interpolation, Csi est l'effort obtenu en sortie de l'ensemble d'actionnement pour une rotation de la sortie dans le deuxième sens,
Ie est une intensité appliquée en entrée de l'ensemble d'actionnement,
l'étape d'établir un coefficient de correction de commande comprend le calcul du coefficient de correction comme suit :

[Math 1]

$$\lambda = \frac{i^{-1} * \sqrt{B^{-1} * (a1 * a2)}}{K}$$

Où :

B est un coefficient d'asymétrie qui se calcule comme suit :

[Math 2]

$$B = \frac{Rd}{Ri}$$

avec

Rd : rendement théorique du réducteur lorsque la charge en sortie du réducteur est résistante ;
Ri : rendement théorique du réducteur lorsque la charge en sortie du réducteur est motrice;

i est le rapport de réduction

K est la constante électromagnétique

Le procédé de commande trouve une application particulièrement intéressante pour les actionneurs comportant un premier réducteur comprenant un engrenage à onde de déformation défini par des premiers paramètres de construction qui comprennent une première forme de couronne extérieure déformable, un premier nombre de dents de couronne extérieure déformable, un premier profil de denture, un deuxième nombre de dents de couronne intérieure. Le procédé comprend une étape préliminaire de calibrage comprenant les étapes suivantes :

- sélectionner un deuxième réducteur défini par des deuxièmes paramètres de construction identiques aux premiers paramètres de construction ;
- établir une troisième fonction de caractéristique du deuxième réducteur liant un effort appliqué en entrée du deuxième réducteur et un effort obtenu en sortie du deuxième réducteur pour un mouvement d'une sortie du deuxième réducteur dans un troisième sens ;
- établir une quatrième fonction de caractéristique du deuxième réducteur liant un effort appliqué en entrée du deuxième réducteur et un effort obtenu en sortie du deuxième réducteur pour un mouvement d'une sortie du deuxième réducteur dans un quatrième sens opposé au troisième sens ;
- déterminer une pluralité de couples de valeurs tels que :

$$x1-(1/i)*F3(x1) \ =F4(x2)-i*x2$$

dans lequel

x1 est une première abscisse

x2 est une deuxième abscisse

i est le rapport de réduction

F3(x1) est la troisième fonction de caractéristique ;

F4(x2) est la quatrième fonction de caractéristique ;

- interpoler une cinquième fonction de détermination de la deuxième abscisse en fonction de la première abscisse sous la forme d'une fonction polynomiale de degré 2 s'écrivant :

$$x2= \ \alpha*x1^2+ \ \beta*x1 \ + \ \gamma,$$

Où $\alpha$, $\beta$ et $\gamma$ sont des constantes déterminées par interpolation,

- la première fonction de caractéristique étant établie sous la forme d'une fonction polynomiale de degré 2 qui s'écrit sous la forme

$$Csd(Ie)= \ a'1*Ie^2 \ + \ b'1*Ie \ + \ c'1$$

Où :

a'1, b'1 et c'1 sont des constantes déterminées par interpolation ;

Csd est l'effort obtenu en sortie de l'unité d'actionnement pour un mouvement de la sortie du deuxième réducteur dans le troisième sens,

Ie est une intensité appliquée en entrée de l'actionneur,

- la deuxième fonction de caractéristique étant établie sous la forme d'une fonction polynomiale de degré 2 qui s'écrit sous la forme

$$Csi(Ie)= \ a'2*Ie^2 \ + \ b'2*Ie \ + \ c'2$$

Où :

a'2, b'2 et c'2 sont des constantes déterminées par interpolation ;

Csi est l'effort obtenu en sortie de l'unité d'actionnement pour un mouvement de la sortie du deuxième réducteur dans le quatrième sens,

Ie est une intensité appliquée en entrée de l'actionneur,

- l'étape d'établir un coefficient de correction de commande comprend une étape d'ajustement du coefficient de commande de manière à minimiser la somme des carrés des écarts entre la sixième et la septième fonction suivantes :

[Math 3]

$$F6(X) = a'2 * X^2 + b'2 * X + c'2$$

[Math 4]

$$F7(X) = (\lambda * i - \alpha^{-1} * \lambda^{-1} * a'1) * X + 0.5 * \alpha^{-1}$$
$$* (i + \alpha^{-1} * \beta * \lambda^{-2} * a'1 - \lambda^{-1} * b'1)$$
$$* \left( \sqrt{\beta^2 - 4 * \alpha * (\gamma - \lambda * X)} - \beta \right) + \alpha^{-1} * \lambda^{-2} * a'1 * \gamma - c'1$$

Où : i est le rapport de réduction

$\lambda$ est le coefficient de correction d'entrée de commande. Avantageusement, le procédé décrit ci-dessus s'applique aussi bien lorsque l'actionneur est un actionneur à sortie rotative que lorsque l'actionneur est un actionneur à sortie linéaire.

D'autres caractéristiques et avantages de l'invention ressortiront à la lecture de la description qui suit d'un mode de réalisation particulier/ d'une mise en œuvre particulière et non limitatif/limitative de l'invention.

BREVE DESCRIPTION DES DESSINS

Il sera fait référence aux dessins annexés, parmi lesquels :

[Fig. 1] la figure 1 est une représentation schématique d'un ensemble d'actionnement selon un premier mode de réalisation de l'invention ;
[Fig. 2] la figure 2 est une représentation schématique d'un premier tableau et un deuxième tableau de valeurs de couple de sortie de l'ensemble d'actionnement de la figure 1 en fonction d'une intensité d'entrée ;
[Fig. 3] la figure 3 est une représentation schématique d'un diagramme de transfert de l'ensemble d'actionnement de la figure 1 ;
[Fig. 4] la figure 4 est une représentation schématique d'un troisième tableau et un quatrième tableau de valeurs de couple de sortie de l'ensemble d'actionnement de la figure 1 en fonction d'une intensité d'entrée corrigée ;
[Fig. 5] la figure 5 est une représentation schématique d'un deuxième réducteur à engrenage à onde de déformation selon un deuxième mode de réalisation de l'invention ;
[Fig. 6] la figure 6 est une représentation schématique d'un banc d'essai ;
[Fig. 7] la figure 7 est une représentation schématique d'un cinquième tableau de valeurs de couple de sortie pour un premier sens de mouvement de la sortie d'un ensemble d'actionnement selon un deuxième mode de réalisation de l'invention en fonction d'une intensité d'entrée ;
[Fig. 8] la figure 8 est une représentation schématique d'un sixième tableau de valeurs de couple de sortie pour un deuxième sens de mouvement de la sortie d'un ensemble d'actionnement selon un deuxième mode de réalisation de l'invention en fonction d'une intensité d'entrée ;
[Fig. 9] la figure 9 est une représentation schématique d'un septième tableau de valeurs de première abscisse en fonction de la deuxième abscisse indirecte.

DESCRIPTION DETAILLEE DE L'INVENTION

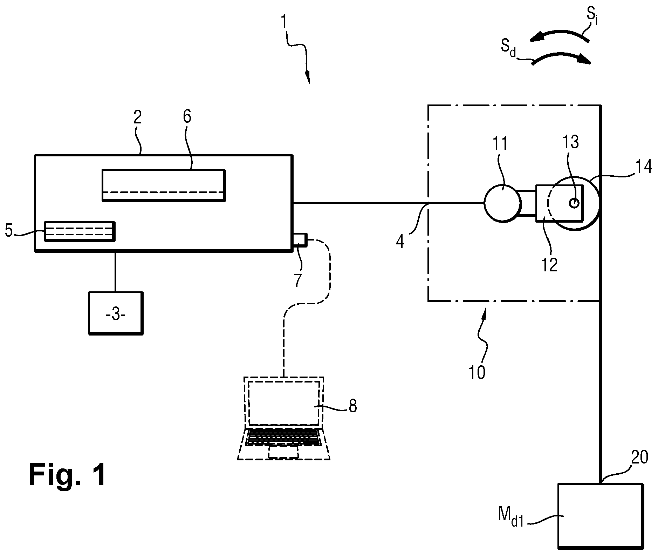

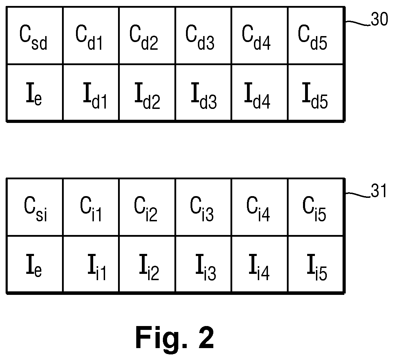

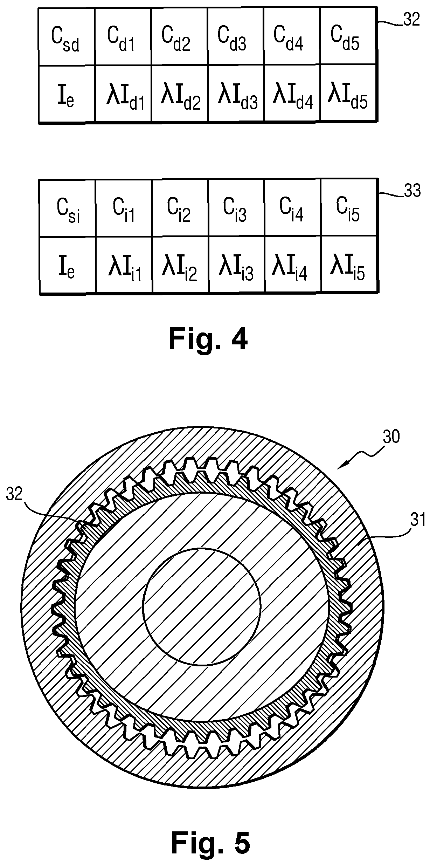

En référence aux figures 1 à 4, le procédé de commande selon l'invention va être décrit en application à un ensemble d'actionnement généralement désigné 1 et qui comprend un servoamplificateur numérique 2 qui est relié d'une part à une source de courant 3 et d'autre part à une entrée 4 d'un actionneur 10. Le servoamplificateur 2 comprend un clavier 5 pour entrer une consigne de courant et un écran 6 d'affichage de la consigne. Le servoamplificateur 2 comprend également une prise auxiliaire permettant de relier le servoamplificateur 2 à une unité de commande électronique 8 de type micro-ordinateur.

L'actionneur 10 comprend un moteur 11 relié à un réducteur 12 dont la sortie rotative 13 est reliée à un tambour 14. Comme c'est généralement le cas, le moteur 11 et le réducteur 12 sont livrés déjà assemblés sous la forme d'un ensemble également appelé « motoréducteur ». Le moteur 11 possède une constante électromagnétique indicative $K_{11}$ et le réducteur 12 est, selon un premier mode de réalisation de l'invention, un réducteur à caractéristique de transfert linéaire, ici un réducteur à train d'engrenage, de rapport de réduction connu i.

Selon une première étape du procédé, on applique une première masse connue Md1 en l'extrémité 20 d'un câble 21 enroulé sur le tambour 14. L'intensité d'entrée du servoamplificateur 2 est ensuite ajustée pour obtenir un équilibrage de l'unité d'actionnement 1, à savoir un déplacement de la sortie 13 dans un premier sens direct Sd (ici un sens horaire selon la représentation de la figure 1) à une vitesse constante réputée faible. Une vitesse est réputée faible au sens de la demande de brevet lorsqu'elle est inférieure ou égale à une vitesse limite au-dessus de laquelle la vitesse commence à avoir une influence décelable sur le frottement. Par définition, en dessous de cette vitesse, le frottement ne dépend plus alors que de la charge sur les pièces mobiles en contact (donc de l'effort transmis). Typiquement, une vitesse est considérée faible lorsqu'elle est inférieure à 10% de la vitesse nominale du réducteur. Le premier sens direct correspond, ici, à un transfert d'énergie du moteur 11 vers la charge (première masse Md1). La première intensité d'entrée Id1 correspondant à la masse Md1 -c'est-à-dire à un couple Cd1 connu- est enregistrée.

La première étape est répétée avec des premières masses Md2, Md3, Md4 et Md5 différentes. Les premières intensités Id2, Id3, Id4 et Id5 associées aux couples Cd2, Cd3, Cd4 et Cd5 sont enregistrées. On obtient alors un premier tableau 30 donnant le couple de sortie Csd en sens direct en fonction d'une intensité d'entrée Ie lue sur le servoamplificateur 2.

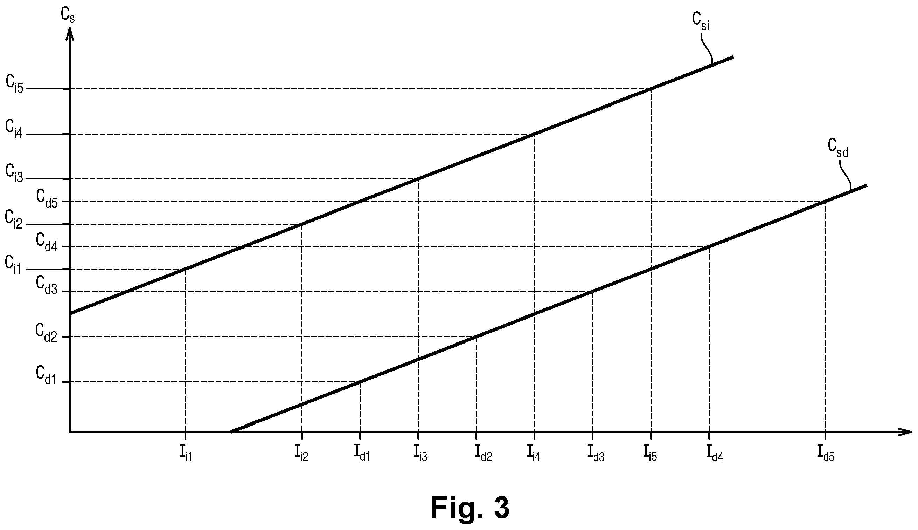

Selon une deuxième étape, et à l'aide de méthodes connues d'interpolation, une première fonction interpolée Csd de caractéristique directe est établie à partir des premières intensités d'entrée Id1 à Id5 et des premiers couples de sorties Cd1 à Cd5 (figure 3).

Dans le cas d'un actionneur à caractéristique de transfert linéaire, la première fonction interpolée Csd de caractéristique directe peut s'écrire sous la forme d'une fonction affine comme suit :

$$Csd(Ie) = a1*Ie + b1 \quad (1)$$

Où :

a1 et b1 sont des constantes déterminées par interpolation, Csd est le couple obtenu à la sortie 13 de l'actionneur 10 en sens direct,
Ie est une intensité appliquée en entrée de l'actionneur et mesurée par le servoamplificateur 2.

La troisième étape du procédé de l'invention est similaire à la première étape car elle comprend l'application de deuxièmes masses connue Mi1 à Mi5 en l'extrémité 20 du câble 21 et la mesure des intensités d'entrée du servoamplificateur 2 requise pour obtenir un équilibrage de l'unité d'actionnement 1, à savoir un déplacement de la sortie 13 dans un deuxième sens indirect Si (ici un sens antihoraire selon la représentation de la figure 1) à une vitesse constante réputée faible. Les premières intensité d'entrée Ii1 à Ii5 correspondant aux deuxièmes masses Mi1 à Mi5 -c'est-à-dire à des couples Ci1 à Ci5 connus- sont enregistrées. On obtient alors un deuxième tableau 31 donnant le couple de sortie Csi en sens indirect en fonction d'une intensité d'entrée Ie lue sur le servoamplificateur.

Selon une quatrième étape, et à l'aide de méthodes connues d'interpolation, une deuxième fonction interpolée Csi de caractéristique indirecte est établie à partir des deuxièmes intensités d'entrée Ii1 à Ii5 et des deuxièmes couples de sorties Ci1 à Ci5 (figure 3).

Dans le cas d'un actionneur à caractéristique de transfert linéaire, la deuxième fonction interpolée Csi de caractéristique indirecte peut s'écrire sous la forme d'une fonction affine comme suit :

$$Csi(Ie) = a2*Ie + b2$$

Où :

a2 et b2 sont des constantes déterminées par interpolation, Csi est le couple obtenu en sortie de l'actionneur en sens indirect,
Ie est une intensité appliquée en entrée de l'actionneur, Selon une cinquième étape, on calcule un coefficient de correction comme de la manière suivante :

[Math 1]

$$\lambda = \frac{i^{-1} * \sqrt{B^{-1} * (a1 * a2)}}{K_{11}}$$

Où :
B est un coefficient d'asymétrie qui se calcule comme suit :

[Math 2]

$$B = \frac{Rd}{Ri}$$

avec

Rd : rendement théorique du réducteur lorsque la charge en sortie du réducteur est résistante ;
Ri : rendement théorique du réducteur lorsque la charge en sortie du réducteur est motrice;
i est le rapport de réduction du premier réducteur 12
$K_{11}$ est la constante électromagnétique indicative du moteur 11
$\lambda$ est le coefficient de correction d'entrée de commande. A titre d'exemple, un réducteur à engrenage possède un coefficient d'asymétrie B qui est égal à 1. Dans le cas d'un réducteur comprenant un ensemble vis/écrou, le coefficient d'asymétrie B s'écrit comme suit:

[Math 5]

$$B = \frac{Rd}{Ri} = \frac{\dfrac{(1 - \mu * \tan \alpha')}{(1 + \mu * \tan^{-1} \alpha')}}{\dfrac{(1 - \mu * \tan^{-1} \alpha')}{(1 + \mu * \tan \alpha')}}$$

Avec
$\mu$ : le coefficient de frottement de glissement du couple de matériaux de la vis et de l'écrou ou le coefficient de frottement de roulement pour une vis à billes ou à rouleaux ;
$\alpha'$ : l'angle de filet de l'ensemble vis-écrou

Selon une sixième étape, on établit une première caractéristique corrigée directe F1. Pour ce faire, on corrige, par multiplication par le coefficient de correction d'entrée de commande $\lambda$, les intensités figurant au premier tableau 30. On obtient un troisième tableau corrigé 32 qui met en correspondance des valeurs d'intensité d'entrée appliquées par le servoamplificateur 2 avec un couple de sortie Csd dans le sens direct. Il est alors possible de commander l'application d'un couple précis en sortie de l'ensemble d'actionnement 1 par l'application d'un courant de valeur déterminée. La correction effectuée sur l'axe des entrées permet de disposer d'une caractéristique corrigée en sens directe plus précise. Les imprécisions liées à la valeur de la constante électromagnétique $K_{11}$ et aux imprécisions du servoamplificateur 2 sont compensées par le coefficient de correction d'entrée de commande $\lambda$. Ainsi, en utilisant la première caractéristique corrigée directe F1, il est possible d'associer précisément une valeur d'intensité d'entrée à un couple d'équilibrage appliqué en sortie de l'ensemble d'actionnement 1, et réciproquement.

Selon une septième étape, on établit une première caractéristique corrigée indirecte F2. Pour ce faire, on corrige, par multiplication par le coefficient de correction d'entrée de commande $\lambda$, les intensités figurant au deuxième tableau 31. On obtient un quatrième tableau corrigé 33 qui met en correspondance des valeurs d'intensité d'entrée Ie appliquées par le servoamplificateur 2 avec un couple de sortie Csd dans le sens indirect.

Selon une huitième étape, on exploite la première caractéristique corrigée directe F1 et la deuxième caractéristique corrigée indirecte F2 pour commander l'ensemble d'actionnement 1, par exemple pour réaliser une compensation du frottement résultant de la charge et obtenir une loi d'amplification de couple quasi-proportionnelle. Selon un mode de réalisation préféré, la première caractéristique corrigée directe F1 et la deuxième caractéristique corrigée indirecte F2 sont entrées dans l'unité de commande 8.

Les éléments identiques ou analogues à ceux précédemment décrits porteront une référence numérique identique à celle-ci dans la description qui suit d'un deuxième mode de réalisation de l'invention.

Selon un deuxième mode de réalisation de l'invention, le premier réducteur 12 comprend un engrenage 30 à onde de déformation. L'engrenage 30 comprend une couronne extérieure 31 comprenant un premier nombre de dents Z31 présentant un premier profil de denture. L'engrenage 30 comprend une couronne intérieure 32 possédant un deuxième nombre de dents Z32. Le premier nombre de dents Z31, le deuxième nombre de dents Z32 et le premier profil de denture définissent les premiers paramètres de construction du premier réducteur 12.

Selon une première étape d'une phase préliminaire de calibrage, on place sur un banc d'essai 60 un deuxième réducteur 40 défini par des deuxièmes paramètres de construction identiques aux premiers paramètres de construction (même forme d'engrenage déformable, même profil de denture, même nombre de dents de couronne intérieure, même nombre de dents de couronne extérieure). L'arbre d'entrée 41 et l'arbre de sortie 42 du deuxième réducteur 40 sont respectivement pourvus d'un tambour d'entrée 43 et d'un tambour de sortie 44.

Selon une deuxième étape de la phase préliminaire de calibrage, on applique une troisième masse connue M'ds1 en l'extrémité 50 d'un câble 51 enroulé sur le tambour de sortie 44. On détermine alors expérimentalement, la quatrième masse M'de1 à appliquer en l'extrémité 52 d'un câble 53 enroulé sur le tambour d'entrée 43 pour obtenir un équilibrage du deuxième réducteur 40, à savoir une rotation de l'arbre de sortie 42 dans un premier sens direct Sd à une vitesse constante réputée faible. Le quatrième couple d'entrée direct C'de1 engendré par la quatrième masse d'entrée M'ed1 et qui correspond à la troisième masse M'sd1 (soit un troisième couple de sortie direct C'ds1) est enregistré.

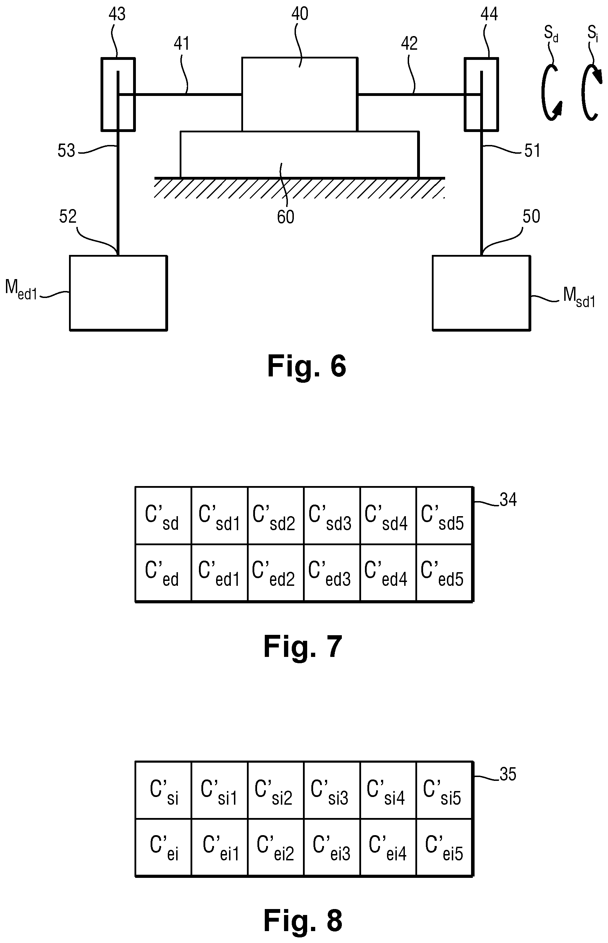

Selon une troisième étape de la phase préliminaire de calibrage, la deuxième étape de la phase préliminaire de calibrage est répétée avec des troisièmes masses M'sd2, M'sd3, M'sd4 et M'sd5 différentes. Les quatrièmes couples d'entrée directs C'ed2, C'ed3, C'ed4 et C'ed5 associés aux troisièmes couples de sortie directs C'sd2, C'sd3, C'sd4 et C'sd5 sont enregistrées. On obtient alors un cinquième tableau 34 donnant le troisième couple de sortie C'sd en sens direct en fonction d'un quatrième couple d'entrée C'ed (Figure 7).

Selon une quatrième étape de la phase préliminaire de calibrage, on établit, sur la base des informations du cinquième tableau 34, une troisième fonction interpolée de caractéristique directe F3 du deuxième réducteur 40 liant un couple C'ed appliqué en entrée du deuxième réducteur 40 et un couple C'sd obtenu en sortie du deuxième réducteur 40 pour un premier sens direct Sd.

Selon une cinquième étape de la phase préliminaire de calibrage, de manière homologue et pour un sens de rotation indirect Si de l'arbre de sortie 42 opposé au sens direct Sd, on établit par mesure un sixième tableau 35 qui associe des cinquièmes couples de sortie indirects C'si1, C'si2, C'si3, C'si4 et C'si5 avec des sixièmes couples d'entrée indirects C'ei2, C'ei3, C'ei4 et C'ei5 (figure 8)

Selon une sixième étape de la phase préliminaire de calibrage, on établit, sur la base des informations du sixième tableau 35, une quatrième fonction interpolée de caractéristique indirecte F4 du deuxième réducteur 40 liant un couple C'ei appliqué en entrée du deuxième réducteur 40 et un couple C'si obtenu en sortie du deuxième réducteur 40 pour un deuxième sens indirect Si opposé au premier sens direct Sd.

Selon une septième étape de la phase préliminaire de calibrage, on détermine une pluralité de couples de valeurs tels que :

$$x1-(1/i)*F3(x1)=F4(x2)-i*x2$$

dans lequel

x1 est une première abscisse directe
x2 est une deuxième abscisse indirecte
i est le premier rapport de réduction, identique au deuxième rapport de réduction du deuxième réducteur 40.
F3(x1) est la troisième fonction interpolée de caractéristique directe ;
F4(x2) est la quatrième fonction interpolée de caractéristique indirecte.

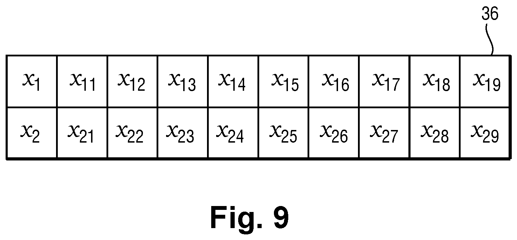

On obtient alors un septième tableau 36 donnant la première abscisse directe x1 en fonction de la deuxième abscisse indirecte x2 (Figure 9).

Selon une huitième étape de la phase préliminaire de calibrage, on établit, sur la base des informations du septième tableau 36, une cinquième fonction interpolée de détermination de la deuxième abscisse indirecte x2 en fonction de la première abscisse directe x1 sous la forme d'une fonction polynomiale de degré 2 s'écrivant :

$$X2= \alpha*x1^2+ \beta*x1 + \gamma,$$

8

Où $\alpha$, $\beta$ et $\gamma$ sont des constantes déterminées par interpolation.

La reproduction des première et deuxième étapes du procédé selon le premier mode de réalisation décrit ci-dessus permet d'établir la première fonction interpolée de caractéristique directe Csd sous la forme d'une fonction polynomiale de degré 2 qui s'écrit sous la forme

$$\text{Csd(Ie)} = \text{a'1*Ie}^2 + \text{b'1*Ie} + \text{c'1}$$

Où :

a'1, b'1 et c'1 sont des constantes déterminées par interpolation ;
Csd est le couple obtenu en sortie de l'actionneur en sens direct,
Ie est une intensité appliquée en entrée de l'actionneur,
La reproduction des troisième et quatrième étapes du procédé selon le premier mode de réalisation décrit ci-dessus permet d'établir la troisième fonction interpolée de caractéristique indirecte sous la forme d'une fonction polynomiale de degré 2 qui s'écrit sous la forme

$$\text{Csi(Ie)} = \text{a'2*Ie}^2 + \text{b'2*Ie} + \text{c'2}$$

Où :

a'2, b'2 et c'2 sont des constantes déterminées par interpolation ;
Csi est le couple obtenu en sortie de l'actionneur en sens indirect,
Ie est une intensité appliquée en entrée de l'actionneur.

Selon une cinquième étape, on établit la valeur du coefficient de correction de commande $\lambda$ en réalisant, à l'aide de méthodes connues en elles-mêmes, un ajustement du coefficient de commande $\lambda$ de manière à minimiser la somme des carrés des écarts entre la sixième et la septième fonction suivantes:

[Math 3]

$$F6(X) = a'2 * X^2 + b'2 * X + c'2$$

[Math 4]

$$F7(X) = (\lambda * i - \alpha^{-1} * \lambda^{-1} * a'1) * X + 0.5 * \alpha^{-1}$$
$$* (i + \alpha^{-1} * \beta * \lambda^{-2} * a'1 - \lambda^{-1} * b'1)$$
$$* \left( \sqrt{\beta^2 - 4 * \alpha * (\gamma - \lambda * X)} - \beta \right) + \alpha^{-1} * \lambda^{-2} * a'1 * \gamma - c'1$$

Où : i est le rapport de réduction
$\lambda$ est le coefficient de correction d'entrée de commande On reproduit ensuite les sixième, septième et huitième étapes décrites en lien avec le premier mode de réalisation de l'invention pour commander l'ensemble d'actionnement 1.

Bien entendu, l'invention n'est pas limitée au mode de réalisation décrit.

En particulier,

- bien qu'ici le pilotage de l'ensemble d'actionnement ait été décrit en lien avec l'équilibrage d'un segment, l'invention s'applique également à d'autres modes de pilotage tels que l'estimation d'un effort de contact ou l'amplification proportionnelle d'un effort maitre mesuré par un capteur de force ou de couple ;
- bien qu'ici l'ensemble d'actionnement comprenne un servoamplificateur de courant, l'invention s'applique également à d'autres types de contrôleurs de courant tels que des amplificateurs dépourvus de boucle de contre réaction, des amplificateurs linéaires, à large bande ou à bande étroite ;
- bien qu'ici le mode de réalisation ait été décrit en lien avec un moteur électrique monophasé, l'invention s'applique également en application d'autres types de moteurs comme par exemple des moteurs triphasés pour lesquels l'intensité prise en compte pour l'établissement des caractéristiques directes et indirectes sera l'intensité quadratique (ou efficace);

- bien qu'ici la phase préliminaire de calibrage comprenne l'établissement d'une caractéristique directe et indirecte interpolée sur la base d'une série de mesures effectuées sur un deuxième réducteur, l'invention s'applique également à l'exploitation de mesures réalisées sur une pluralité de deuxième réducteur pour constituer un résultat moyen à l'aide de méthodes statistiques connues ;

- bien qu'ici des couples soient appliqués sur la sortie et l'entrée du réducteur à l'aide de masses et de tambours, l'invention s'applique également à d'autres moyens d'application d'un couple connu comme par exemple une masse connue suspendue en l'extrémité d'un bras de longueur déterminée ou l'application d'un couple moteur résistant à l'aide d'un actionneur calibré ;

- bien qu'ici la troisième fonction interpolée de caractéristique directe et la quatrième fonction interpolée de caractéristique indirecte aient été établies en utilisant des résultats expérimentaux, l'invention s'applique également à une interpolation utilisant des résultats fournis par le constructeur du réducteur ;

- bien qu'ici le procédé de l'invention ait été décrit en lien avec un ensemble d'actionnement à sortie rotative, l'invention s'applique également à un ensemble d'actionnement à sortie linéaire tels qu'un vérin, les premiers et deuxièmes efforts de sortie appliqués étant alors des forces au lieu de couples ;

- bien qu'ici la pluralité de premiers efforts et la pluralité de deuxièmes efforts aient été appliqués de façon discrète, l'invention s'applique également à une application en continu de la pluralité de premiers efforts et de la pluralité de deuxièmes effort ;

- bien qu'ici la première fonction interpolée de caractéristique soit une fonction de caractéristique dite « directe » correspondant à un transfert d'énergie du moteur vers la charge, l'invention s'applique également à une première fonction interpolée de caractéristique correspondant à un transfert d'énergie de la charge vers le moteur qui devient résistant ;

- bien qu'ici la deuxième fonction interpolée de caractéristique soit une fonction de caractéristique dite « indirecte » correspondant à un transfert d'énergie de la charge vers le moteur, l'invention s'applique également à une deuxième fonction interpolée de caractéristique correspondant à un transfert d'énergie du moteur vers la charge (entrainement) ;

- bien qu'ici le procédé de l'invention ait été décrit en lien avec un premier réducteur comprenant un engrenage à onde de déformation comprenant une couronné déformable refermée, l'invention s'applique également à d'autres types de premier réducteurs comprenant un engrenage à onde de déformation dont la couronne extérieure déformable est en cloche ou évasée voire une couronne extérieure déformable en forme de bandeau comportant un premier nombre de dents et qui s'engage à la fois dans une première couronne intérieure de même nombre de dents et dans une deuxième couronne intérieure d'un deuxième nombre de dents, la première couronne intérieure tournant par rapport à la deuxième couronne intérieure. Les premiers paramètres de construction comprennent alors également ces premiers paramètres supplémentaires de construction ;

- bien qu'ici il ait été fait mention d'un premier sens de mouvement de la sortie et d'un deuxième sens de mouvement de la sortie opposé au premier, l'invention s'applique également aux systèmes d'actionnement comprenant un réducteur non-réversible tel qu'une vis à pas fin ;

- bien qu'ici la correction des intensités par le coefficient de correction de commande ait été réalisée sur les valeurs discrètes d'intensité mesurées, l'invention s'applique également à une correction des intensités par le coefficient de correction de commande réalisée directement sur les première et deuxième caractéristiques ;

- bien qu'ici les courbes de caractéristiques aient été interpolées en utilisant cinq points de fonctionnement, l'invention s'applique également à l'interpolation de courbes de caractéristique sur la base d'un nombre différents de points, inférieur ou égal à quatre ou supérieur à cinq.

## Revendications

1. Procédé de commande d'un ensemble d'actionnement (1) électrique comportant un contrôleur de courant (2) relié à un actionneur (10), l'actionneur (10) comprenant un moteur (11) couplé à un réducteur (12) ayant un rapport de réduction connu, l'ensemble d'actionnement (1) étant pourvu d'une sortie (13), le procédé étant **caractérisé en ce qu'**il comprend les étapes suivantes :

   - appliquer une pluralité de premiers efforts de sortie connus sur la sortie (13) de l'ensemble d'actionnement et enregistrer à l'aide du contrôleur de courant (2) une pluralité de premières intensités d'entrée associées à appliquer en entrée de l'ensemble d'actionnement (1) pour obtenir un équilibre de l'ensemble d'actionnement (1) dans un premier sens de la sortie (13) ;
   - établir par interpolation une première fonction de caractéristique de l'ensemble d'actionnement (1) liant une intensité commandée en entrée de l'ensemble d'actionnement (1) et un effort obtenu en sortie de l'ensemble d'actionnement (1) ;
   - appliquer une pluralité de deuxièmes efforts de sortie connus sur la sortie (13) de l'ensemble d'actionnement (1) et enregistrer à l'aide du contrôleur de courant (2) une pluralité de deuxièmes intensités d'entrée associées à appliquer en entrée de l'ensemble d'actionnement (1) pour obtenir un équilibre de l'ensemble d'actionnement (1) dans un deuxième sens de de la sortie (13) opposé au premier sens;

- établir par interpolation une deuxième fonction de caractéristique de l'ensemble d'actionnement (1) liant une intensité commandée en entrée de l'ensemble d'actionnement (1) et un effort obtenu en sortie (13) de l'ensemble d'actionnement (1) ;

- établir à partir de la première fonction de caractéristique de l'ensemble d'actionnement (1), de la deuxième fonction de caractéristique de l'ensemble d'actionnement (1), d'une constante magnétique du moteur (11) et du rapport de réduction du réducteur (12), un coefficient de correction d'entrée de commande destiné à être appliqué par multiplication à une valeur d'entrée de commande pour compenser des imprécisions liées à la valeur de la constante magnétique du moteur (11) et aux imprécisions du contrôleur de courant (2) ;

- commander l'ensemble d'actionnement (1) en appliquant le coefficient de correction de commande.

2. Procédé selon la revendication 1, dans lequel, la première fonction de caractéristique étant une fonction affine qui s'écrit sous la forme

$$Csd(Ie) = a1*Ie + b1$$

Où :

a1 et b1 sont des constantes déterminées par interpolation, Csd est l'effort obtenu en sortie de l'ensemble d'actionnement (1) pour un mouvement de la sortie (13) dans le premier sens,
Ie est une intensité appliquée en entrée de l'ensemble d'actionnement (1),
la deuxième fonction de caractéristique étant une fonction affine qui s'écrit sous la forme :

$$Csi(Ie) = a2*Ie + b2$$

Où :

a2 et b2 sont des constantes déterminées par interpolation, Csi est l'effort obtenu en sortie de l'ensemble d'actionnement (1) pour une rotation de la sortie (13) dans le deuxième sens,
Ie est une intensité appliquée en entrée de l'ensemble d'actionnement (1),
l'étape d'établir un coefficient de correction d'entrée de commande comprend le calcul du coefficient de correction comme suit :

[Math 1]

$$\lambda = \frac{i^{-1} * \sqrt{B^{-1} * (a1 * a2)}}{K}$$

Où :
B est un coefficient d'asymétrie qui se calcule comme suit :

[Math 2]

$$B = \frac{Rd}{Ri}$$

avec

Rd : rendement théorique du réducteur lorsque la charge en sortie du réducteur est résistante ;
Ri : rendement théorique du réducteur lorsque la charge en sortie du réducteur est motrice
i est le rapport de réduction

K est la constante électromagnétique

$\lambda$ est le coefficient de correction d'entrée de commande.

3. Procédé selon la revendication 1, dans lequel, le premier réducteur (12) comprenant un engrenage à onde de déformation (30) défini par des premiers paramètres de construction qui comprennent une première forme de couronne extérieure déformable, un premier nombre de dents de couronne extérieure déformable, un premier profil de denture, un deuxième nombre de dents de couronne intérieure, le procédé comprend une étape préliminaire de calibrage comprenant les étapes suivantes :

- sélectionner un deuxième réducteur (40) défini par des deuxièmes paramètres de construction identiques aux premiers paramètres de construction ;
- établir une troisième fonction de caractéristique du deuxième réducteur (40) liant un effort appliqué en entrée du deuxième réducteur (40) et un effort obtenu en sortie du deuxième réducteur (40) pour un mouvement d'une sortie du deuxième réducteur (40) dans un troisième sens ;
- établir une quatrième fonction de caractéristique du deuxième réducteur (40) liant un effort appliqué en entrée du deuxième réducteur (40) et un effort obtenu en sortie du deuxième réducteur (40) pour un mouvement d'une sortie du deuxième réducteur (40) dans un quatrième sens opposé au troisième sens ;
- déterminer une pluralité de couples de valeurs tels que :

$$x1-(1/i)*F3(x1)=F4(x2)-i*x2$$

dans lequel

x1 est une première abscisse
x2 est une deuxième abscisse
i est le rapport de réduction
F3(x1) est la troisième fonction de caractéristique ;
F4(x2) est la quatrième fonction de caractéristique ;

- interpoler une cinquième fonction de détermination de la deuxième abscisse en fonction de la première abscisse sous la forme d'une fonction polynomiale de degré 2 s'écrivant :

$$x2= \alpha*x1^2+ \beta*x1 + \gamma,$$

Où $\alpha$, $\beta$ et $\gamma$ sont des constantes déterminées par interpolation,
- la première fonction de caractéristique étant établie sous la forme d'une fonction polynomiale de degré 2 qui s'écrit sous la forme

$$Csd(Ie)= a'1*Ie^2 + b'1*Ie + c'1$$

Où :

a'1, b'1 et c'1 sont des constantes déterminées par interpolation ;
Csd est l'effort obtenu en sortie de l'unité d'actionnement (1) pour un mouvement de la sortie du deuxième réducteur (40) dans le troisième sens,
Ie est une intensité appliquée en entrée de l'actionneur,

- la deuxième fonction de caractéristique étant établie sous la forme d'une fonction polynomiale de degré 2 qui s'écrit sous la forme

$$Csi(Ie)= a'2*Ie^2 + b'2*Ie + c'2$$

Où :

a'2, b'2 et c'2 sont des constantes déterminées par interpolation ;
Csi est l'effort obtenu en sortie de l'unité d'actionnement (1) pour un mouvement de la sortie du deuxième réducteur (40) dans le quatrième sens,
Ie est une intensité appliquée en entrée de l'actionneur,

- l'étape d'établir un coefficient de correction d'entrée de commande comprend une étape d'ajustement du coefficient de commande de manière à minimiser la somme des carrés des écarts entre la sixième et la septième fonction suivantes:

[Math 3]

$$F6(X) = a'2 * X^2 + b'2 * X + c'2$$

[Math 4]

$$F7(X) = (\lambda * i - \alpha^{-1} * \lambda^{-1} * a'1) * X + 0.5 * \alpha^{-1}$$
$$* (i + \alpha^{-1} * \beta * \lambda^{-2} * a'1 - \lambda^{-1} * b'1)$$
$$* \left( \sqrt{\beta^2 - 4 * \alpha * (\gamma - \lambda * X)} - \beta \right) + \alpha^{-1} * \lambda^{-2} * a'1 * \gamma - c'1$$

Où : i est le rapport de réduction
$\lambda$ est le coefficient de correction d'entrée de commande.

4. Procédé selon l'une quelconque des revendications précédentes, dans lequel l'actionneur (10) est un actionneur à sortie (13) rotative.

5. Procédé selon l'une quelconque des revendications 1 à 3, dans lequel l'actionneur (10) est un actionneur à sortie (13) linéaire.

**Patentansprüche**

1. Verfahren zur Steuerung einer elektrischen Betätigungsanordnung (1), enthaltend einen Stromregler (2), der mit einem Aktuator (10) verbunden ist, wobei der Aktuator (10) einen Motor (11) umfasst, der mit einem Reduktionsgetriebe (12) mit bekanntem Reduktionsverhältnis gekoppelt ist, wobei die Betätigungsanordnung (1) mit einem Ausgang (13) versehen ist, wobei das Verfahren **dadurch gekennzeichnet ist, dass** es die Schritte umfasst, dass:

- eine Mehrzahl bekannter erster Ausgangskräfte auf den Ausgang (13) der Betätigungsanordnung aufgebracht wird und mithilfe des Stromreglers (2) eine Mehrzahl zugehöriger erster Eingangsstromstärken erfasst wird, die an den Eingang der Betätigungsanordnung (1) anzulegen sind, um ein Gleichgewicht der Betätigungsanordnung (1) in einer ersten Richtung des Ausgangs (13) zu erhalten;
- durch Interpolation eine erste Kennlinienfunktion der Betätigungsanordnung (1) erstellt wird, welche eine an der Betätigungsordnung (1) eingangsseitig gesteuerte Stromstärke und eine an der Betätigungsanordnung (1) ausgangsseitig erhaltene Kraft miteinander verknüpft;
- eine Mehrzahl bekannter zweiter Ausgangskräfte auf den Ausgang (13) der Betätigungsanordnung (1) aufgebracht wird und mithilfe des Stromreglers (2) eine Mehrzahl zugehöriger zweiter Eingangsstromstärken erfasst wird, die an den Eingang der Betätigungsanordnung (1) anzulegen sind, um ein Gleichgewicht der Betätigungsanordnung (1) in einer der ersten Richtung entgegengesetzten, zweiten Richtung des Ausgangs (13) zu erhalten;
- durch Interpolation eine zweite Kennlinienfunktion der Betätigungsanordnung (1) erstellt wird, welche eine an der Betätigungsanordnung (1) eingangsseitig gesteuerte Stromstärke und eine an dem Ausgang (13) der Betätigungsanordnung (1) erhaltene Kraft miteinander verknüpft;
- aus der ersten Kennlinienfunktion der Betätigungsanordnung (1), aus der zweiten Kennlinienfunktion der Betätigungsanordnung (1), aus einer magnetischen Feldkonstante des Motors (11) und aus dem Reduktionsverhältnis des Reduktionsgetriebes (12) ein Steuereingangs-Korrekturkoeffizient ermittelt wird, der dazu bestimmt ist, durch Multiplikation auf einen Steuereingangswert angewandt zu werden, um Ungenauigkeiten im Zusammenhang mit dem Wert der magnetischen Feldkonstante des Motors (11) und Ungenauigkeiten des Stromreglers (2) auszugleichen;

- die Betätigungsanordnung (1) unter Anwendung des Steuerungskorrekturkoeffizienten gesteuert wird.

2. Verfahren nach Anspruch 1, wobei, da es sich bei der ersten Kennlinienfunktion um eine affine Funktion handelt, die sich wie folgt ausdrücken lässt:

$$Csd(Ie) = a1 * Ie + b1$$

wobei:

a1 und b1 durch Interpolation ermittelte Konstanten sind,
Csd die an der Betätigungsanordnung (1) ausgangsseitig erhaltene Kraft für eine Bewegung des Ausgangs (13) in der ersten Richtung ist, Ie eine an den Eingang der Betätigungsanordnung (1) angelegte Stromstärke ist, wobei es sich bei der zweiten Kennlinienfunktion um eine affine Funktion handelt, die sich wie folgt ausdrücken lässt:

$$Csi(Ie) = a2 * Ie + b2$$

wobei:

a2 und b2 durch Interpolation ermittelte Konstanten sind,
Csd die an der Betätigungsanordnung (1) ausgangsseitig erhaltene Kraft für eine Drehbewegung des Ausgangs (13) in der zweiten Richtung ist,
Ie eine an der Betätigungsanordnung (1) eingangsseitig angelegte Stromstärke ist,
der Schritt zur Ermittlung eines Steuereingangs-Korrekturkoeffizienten das Berechnen des Korrekturkoeffizienten umfasst, welcher sich wie folgt ausdrücken lässt: [Math 1]

$$\lambda = \frac{i^{-1} * \sqrt{B^{-1} * (a1 * a2)}}{K}$$

wobei:
B ein Asymmetriekoeffizient ist, der wie folgt berechnet wird: [Math 2]

$$B = \frac{Rd}{Ri}$$

mit
Rd als theoretischem Wirkungsgrad des Reduktionsgetriebes, wenn die Last am Ausgang des Reduktionsgetriebes eine Widerstandslast ist;
Ri als theoretischem Wirkungsgrad des Reduktionsgetriebes, wenn die Last am Ausgang des Reduktionsgetriebes eine Antriebslast ist;
i als Reduktionsverhältnis
K als elektromagnetischer Feldkonstante
$\lambda$ als Steuereingangs-Korrekturkoeffizienten.

3. Verfahren nach Anspruch 1, wobei das Verfahren, bei welchem das erste Reduktionsgetriebe (12) ein Wellgetriebe (30) umfasst, das durch erste Konstruktionsparameter definiert ist, welche eine erste Form der verformbaren Außenkrone, eine erste Zahnanzahl der verformbaren Außenkrone, ein erstes Verzahnungsprofil, eine zweite Zahnanzahl der Innenkrone umfassen, einen vorbereitenden Kalibrierungsschritt umfasst, welcher die Schritte umfasst, dass:

- ein zweites Reduktionsgetriebe (40) ausgewählt wird, das durch zweite Konstruktionsparameter definiert ist, die mit den ersten Konstruktionsparametern identisch sind;
- eine dritte Kennlinienfunktion des zweiten Reduktionsgetriebes (40) erstellt wird, welche eine an das zweite Reduktionsgetriebe (40) eingangsseitig angelegte Kraft und eine an dem zweiten Reduktionsgetriebe (40) ausgangsseitig erhaltene Kraft für eine Bewegung eines Ausgangs des zweiten Reduktionsgetriebes (40) in einer dritten Richtung miteinander verknüpft;

- eine vierte Kennlinienfunktion des zweiten Reduktionsgetriebes (40) erstellt wird, welche eine an das zweite Reduktionsgetriebe (40) eingangsseitig angelegte Kraft und eine an dem zweiten Reduktionsgetriebe (40) ausgangsseitig erhaltene Kraft für eine Bewegung eines Ausgangs des zweiten Reduktionsgetriebes (40) in einer der dritten Richtung entgegengesetzten, vierten Richtung miteinander verknüpft;
- eine Mehrzahl von Wertepaaren ermittelt wird, wie:

$$x1-(1/i)*F3(x1) = F4\{x2\}-i*x2$$

wobei

x1 eine erste Abszisse ist
x2 eine zweite Abszisse ist
i das Reduktionsverhältnis ist
F3(xl) die dritte Kennlinienfunktion ist;
F4{x2) die vierte Kennlinienfunktion ist;

- eine fünfte Funktion zur Ermittlung der zweiten Abszisse in Abhängigkeit zu der ersten Abszisse in Form einer Polynomfunktion zweiten Grades durch Interpolation ermittelt wird, welche sich wie folgt ausdrücken lässt:

$$x2 = \alpha*x1^2 + \beta*x1 + \gamma,$$

wobei $\alpha$, $\beta$ und $\gamma$ durch Interpolation ermittelte Konstanten sind,
- die erste Kennlinienfunktion in Form einer Polynomfunktion zweiten Grades erstellt wird, welche sich wie folgt ausdrücken lässt

$$Csd(le) = a'1*le^2 + b'1*le + c'1$$

wobei:

a'1, b'1 und c'1 durch Interpolation ermittelte Konstanten sind;
Csd die an der Betätigungsanordnung (1) ausgangsseitig erhaltene Kraft für eine Bewegung des Ausgangs des zweiten Reduktionsgetriebes (40) in der dritten Richtung ist,
le die an den Aktuator eingangsseitig angelegte Stromstärke ist,

- die zweite Kennlinienfunktion in Form einer Polynomfunktion zweiten Grades erstellt wird, welche sich wie folgt ausdrücken lässt

$$Csi(le) = a'2*le^2 + b'2*le + c'2$$

wobei:

a'2, b'2 und c'2 durch Interpolation ermittelte Konstanten sind;
Csi die an der Betätigungsanordnung (1) ausgangsseitig erhaltene Kraft für eine Bewegung des Ausgangs des zweiten Reduktionsgetriebes (40) in der vierten Richtung ist,
le eine an den Aktuator eingangsseitig angelegte Stromstärke ist,

- der Schritt zur Ermittlung eines Steuereingangs-Korrekturkoeffizienten einen Schritt zur Anpassung des Steuerungskoeffizienten umfasst, der dazu dient, die Summe der Quadrate der Abweichungen zwischen der folgenden sechsten und siebten Funktion zu minimieren:

[Math 3]

$$F6(X) = a'2 * X^2 + b'2 * X + c'2$$

[Math 4]

$$F7(X) = (\lambda * i - \alpha^{-1} * \lambda^{-1} * a'1) * X + 0.5 * \alpha^{-1}$$
$$* (i + \alpha^{-1} * \beta * \lambda^{-2} * a'1 - \lambda^{-1} * b'1)$$
$$* \left( \sqrt{\beta^2 - 4 * \alpha * (\gamma - \lambda * X)} - \beta \right) + \alpha^{-1} * \lambda^{-2} * a'1 * \gamma - c'1$$

wobei: i das Reduktionsverhältnis ist
λ der Steuereingangs-Korrekturkoeffizient ist.

**4.** Verfahren nach einem der vorhergehenden Ansprüche, wobei es sich bei dem Aktuator (10) um einen Aktuator mit einem rotierenden Ausgang (13) handelt.

**5.** Verfahren nach einem der Ansprüche 1 bis 3, wobei es sich bei dem Aktuator (10) um einen Aktuator mit einem linearen Ausgang (13) handelt.

**Claims**

**1.** Method for controlling an electric actuation assembly (1), comprising a current controller (2) connected to an actuator (10), the actuator (10) comprising a motor (11) coupled with a gearbox (12) having a known reduction ratio, the actuation assembly (1) being provided with an output (13), the method being **characterized in that** it comprises the following steps:

applying a plurality of first known output forces on the output (13) of the actuation assembly and recording using the current controller (2), a plurality of associated first input intensities to be applied at the input of the actuation assembly (1) to obtain a balance of the actuation assembly (1) in a first direction of the output (13);
establishing, by interpolation, a first characteristic function of the actuation assembly (1) linking a controlled intensity at the input of the actuation assembly (1) and a force obtained at the output of the actuation assembly (1);
applying a plurality of second known output sources on the output (13) of the actuation assembly (1) and recording, using the current controller (2), a plurality of associated second input intensities to be applied at the input of the actuation assembly (1) to obtain a balance of the actuation assembly (1) in a second direction of the output (13) opposite to the first direction;
establishing, by interpolation, a second characteristic function of the actuation assembly (1) linking a controlled current at the input of the actuation assembly (1) and a force obtained at the output (13) of the actuation assembly (1);
establishing, on the basis of the first characteristic function of the actuation assembly (1), the second characteristic function of the actuation assembly (1), a magnetic constant of the motor (11) and a reduction ratio of the gearbox (12), a control input correction coefficient intended to be applied by multiplication to a control input value to compensate inaccuracies linked to the value of the magnetic constant of the motor (11) and inaccuracies linked to the current controller (2) ;
controlling the actuation assembly (1) by applying the control correction coefficient.

**2.** Method according to claim 1, wherein, the first characteristic function being a linear function which is written in the form

```
Csd(Ie) = a1*Ie + b1
```

Where:

a1 and b1 are constants determined by interpolation,
Csd is the force obtained at the output of the actuation assembly (1) for a movement of the output (13) in the first direction,
Ie is an intensity applied at the input of the actuation assembly (1),

the second characteristic function being a linear function which is written in the form:

$$Csi(Ie) = a2*Ie + b2$$

Where:

a2 and b2 are constants determined by interpolation,
Csi is the force obtained at the output of the actuation assembly (1) for a rotation of the output (13) in the second direction,
Ie is an intensity applied at the input of the actuation assembly (1),
the step of establishing a control correction coefficient comprises the calculation of the correction coefficient as follows:[Math 1]

$$\lambda = \frac{i^{-1} * \sqrt{B^{-1} * (a1 * a2)}}{K}$$

Where:
B is a skewness coefficient which is calculated as follows: [Math 2]

$$B = \frac{Rd}{Ri}$$

with
Rd: theoretical yield of the gearbox when the output charge of the gearbox is resistant;
Ri: theoretical yield of the gearbox when the output charge of the gearbox is motive
i is the reduction ratio
K is the electromagnetic constant
$\lambda$ is the control input correction coefficient.

3. Method according to claim 1, wherein, the first gearbox (12) comprising a strain wave gearing (30) defined by first construction parameters which comprise a first deformable outer ring shape, a first number of deformable outer ring teeth, a first toothing profile, a second number of inner ring teeth, the method comprises a preliminary calibration step comprising the following steps:

selecting a second gearbox (40) defined by second construction parameters identical to the first construction parameters;
establishing a third characteristic function of the second gearbox (40) linking a force applied at the input of the second gearbox (40) and a force obtained at the output of the second gearbox (40) for a movement of an output of the second gearbox (40) in a third direction;
establishing a fourth characteristic function of the second gearbox (40) linking a force applied at the input of the second gearbox (40) and a force obtained at the output of the second gearbox (40) for a movement of an output of the second gearbox (40) in a fourth direction opposite to the third direction;
determining a plurality of pairs of values such that:

$$x1-(1/i)*F3(x1) = F4(x2)-i*x2$$

wherein

x1 is a first abscissa
x2 is a second abscissa
i is the reduction ratio
F3(x1) is the third characteristic function;
F4(x2) is the fourth characteristic function;

interpolating a fifth function for determining the second abscissa according to the first abscissa in the form of a polynomial function of degree 2 being written:

$$x2 = \alpha * x1^2 + \beta * x1 + \gamma,$$

Where $\alpha$, $\beta$ and $\gamma$ are constants determined by interpolation,
the first characteristic function being established in the form of a polynomial function of degree 2 which is written in the form

$$Csd(Ie) = a'1 * Ie^2 + b'1 * Ie + c'1$$

Where:

a'1, b'1 and c'1 are constants determined by interpolation;
Csd is the forced obtained at the output of the actuation unit (1) for a movement of the output of the second gearbox (40) in the third direction,
Ie is an intensity applied at the input of the actuator,

the second characteristic function being established in the form of a polynomial function of degree 2 which is written in the form

$$Csi(Ie) = a'2 * Ie^2 + b'2 * Ie + c'2$$

Where:

a'2, b'2 and c'2 are constants determined by interpolation;
Csi is the force obtained at the output of the actuation unit (1) for a movement of the output of the second gearbox (40) in the fourth direction,
Ie is a current applied at the input of the actuator,

the step of establishing a control correction coefficient comprises a step of adjusting the control coefficient so as to minimise the following sum of squares of deviations between the sixth and the seventh function:

[Math 3]

$$F6(X) = a'2 * X^2 + b'2 * X + c'2$$

[Math 4]

$$F7(X) = (\lambda * i - \alpha^{-1} * \lambda^{-1} * a'1) * X + 0.5 * \alpha^{-1} * (i + \alpha^{-1} * \beta * \lambda^{-2} * a'1 - \lambda^{-1} * b'1)$$
$$* \left( \sqrt{\beta^2 - 4 * \alpha * (\gamma - \lambda * X)} - \beta \right) + \alpha^{-1} * \lambda^{-2} * a'1 * \gamma - c'1$$

Where: i is the reduction ratio
$\lambda$ is the control input correction coefficient.

4. Method according to any one of the preceding claims, wherein the actuator (10) is a rotary output actuator (13).

5. Method according to any one of claims 1 to 3, wherein the actuator (10) is a linear output actuator (13).

Fig. 1

| $C_{sd}$ | $C_{d1}$ | $C_{d2}$ | $C_{d3}$ | $C_{d4}$ | $C_{d5}$ | 30 |
|----------|----------|----------|----------|----------|----------|----|
| $I_e$ | $I_{d1}$ | $I_{d2}$ | $I_{d3}$ | $I_{d4}$ | $I_{d5}$ | |

| $C_{si}$ | $C_{i1}$ | $C_{i2}$ | $C_{i3}$ | $C_{i4}$ | $C_{i5}$ | 31 |
|----------|----------|----------|----------|----------|----------|----|
| $I_e$ | $I_{i1}$ | $I_{i2}$ | $I_{i3}$ | $I_{i4}$ | $I_{i5}$ | |

# Fig. 2

**Fig. 3**

| $C_{sd}$ | $C_{d1}$ | $C_{d2}$ | $C_{d3}$ | $C_{d4}$ | $C_{d5}$ |
|---|---|---|---|---|---|
| $I_e$ | $\lambda I_{d1}$ | $\lambda I_{d2}$ | $\lambda I_{d3}$ | $\lambda I_{d4}$ | $\lambda I_{d5}$ |

32

| $C_{si}$ | $C_{i1}$ | $C_{i2}$ | $C_{i3}$ | $C_{i4}$ | $C_{i5}$ |
|---|---|---|---|---|---|
| $I_e$ | $\lambda I_{i1}$ | $\lambda I_{i2}$ | $\lambda I_{i3}$ | $\lambda I_{i4}$ | $\lambda I_{i5}$ |

33

## Fig. 4

## Fig. 5

**Fig. 6**

| $C'_{sd}$ | $C'_{sd1}$ | $C'_{sd2}$ | $C'_{sd3}$ | $C'_{sd4}$ | $C'_{sd5}$ |
|-----------|------------|------------|------------|------------|------------|
| $C'_{ed}$ | $C'_{ed1}$ | $C'_{ed2}$ | $C'_{ed3}$ | $C'_{ed4}$ | $C'_{ed5}$ |

**Fig. 7**

| $C'_{si}$ | $C'_{si1}$ | $C'_{si2}$ | $C'_{si3}$ | $C'_{si4}$ | $C'_{si5}$ |
|-----------|------------|------------|------------|------------|------------|
| $C'_{ei}$ | $C'_{ei1}$ | $C'_{ei2}$ | $C'_{ei3}$ | $C'_{ei4}$ | $C'_{ei5}$ |

**Fig. 8**

36

| $x_1$ | $x_{11}$ | $x_{12}$ | $x_{13}$ | $x_{14}$ | $x_{15}$ | $x_{16}$ | $x_{17}$ | $x_{18}$ | $x_{19}$ |
|---|---|---|---|---|---|---|---|---|---|
| $x_2$ | $x_{21}$ | $x_{22}$ | $x_{23}$ | $x_{24}$ | $x_{25}$ | $x_{26}$ | $x_{27}$ | $x_{28}$ | $x_{29}$ |

**Fig. 9**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2960808